# EUROPEAN PATENT APPLICATION

(11) **EP 2 101 328 A2**
(43) Date of publication of application: **16.09.2009**
(21) Application number: 08170442.1
(22) Date of filing: 02.12.2008
(51) Int. Cl.: G11B 20/00, H04N 5/913

(54) **Digital broadcast receiving/recording/reproducing apparatus and digital broadcast receiving/recording/reproducing method**

(30) Priority: 14.03.2008 JP 2008066385
(71) Applicant: Kabushiki Kaisha Toshiba, Minato-ku, Tokyo 105-8001 (JP)
(72) Inventor: Nakano, Hiroyuki, Minato-ku Tokyo 105-8001 (JP); Mori, Takahisa, Minato-ku Tokyo 105-8001 (JP); Mori, Akihiro, Minato-ku Tokyo 105-8001 (JP)
(74) Representative: HOFFMANN EITLE

(57) **Abstract**

A digital broadcast receiving/recording/reproducing apparatus has a receiving module (50) which receives a broadcast signal of a program that is set to be recorded, a processing module (47) which converts the broadcast signal received by the receiving module (50) into digital picture and sound program data, a memory (59) which records copy control information acquired from the broadcast signal received by the receiving module (50), a recording control module (56a) which encrypts the program data converted by the processing module (47) and records the encrypted program data in a specified recording device (70), and a memory control module (56a) which encrypts the copy control information recorded in the memory and records the encrypted copy control information in the specified recording device (70) and deletes the copy control information recorded in the memory (59) after termination of the recording of the encrypted copy control information.

## Description

One embodiment of the invention relates to a digital broadcast receiving/recording/reproducing apparatus and a digital broadcast receiving/recording/reproducing method, and to recording/reproduction of a digital broadcast that is subject to a copy restriction.

In recent years, a storage capacity of an information recording device, e.g., a hard disk is increasing. Therefore, there are a method and an apparatus that connect the above-described information recording device to a digital broadcast receiving/recording/reproducing apparatus to automatically record a desired program in a recording medium.

Further, with the recent popularization of a television receiver that can receive a digital broadcast, an operation of Dubbing 10 (nine copies + one move) is planned depending on broadcast mediums, and an operation of both Copy One Generation and Dubbing 10 is examined.

Furthermore, in a conventional recording scheme, copy control information is recorded in an information recording device at the end of recording of a program in the information recording device.

JP-A 2004-120365 (KOKAI) discloses a recording/reproducing apparatus having a structure where a sub-microcomputer in a PRV module which records image data in an HDD determines whether a flag is kept in a set state upon supply of an electric power and the flag cannot be reset because of blackout during a previous recording operation. When blackout has occurred during recording, the sub-microcomputer retrieves a file that has undergone recording interruption from the HDD and closes the image file. A recording operation is continued if there is an extra recording reservation time period.

JP-A 2006-33332 (KOKAI) discloses a recording/reproducing apparatus having a structure where picture/sound information is continuously stored in a storage circuit when a stop key is operated during a recording operation, and recording of stored information is started when a recording key is again operated within a predetermined time, thereby continuously performing recording.

However, in the recording/reproducing apparatuses disclosed in JP-A 2004-120365 (KOKAI) and JP-A 2006-33332 (KOKAI), recording is restarted so that data corresponding to a period where recording is interrupted can be also recorded when recording is interrupted during a recording operation. In any case, these apparatuses do not take any measure for copy control information in digital broadcasts.

That is, timing and handling of recording the copy control information in an HDD are not explained. Additionally, there is no description about solving method for a problem that original copy information is lost when recording a program in the information recording apparatus is abnormally aborted because of, e.g., power supply interruption.

When there is no original copy control information, digital broadcast programs are substantially operated based on Copy One Generation that allows one-generation copy but restricts the number of times even if adoption of the No More Copy scheme is determined, and hence there occurs no problem. In regard to a program that is subject to Dubbing 10 or both Copy One Generation and Dubbing 10, a program that can be fundamentally copied for nine times is treated as a program that cannot be copied when recording of the program conforming to Dubbing 10 is abnormally aborted.

It is, therefore, an object of the invention to provide a digital broadcast receiving/recording/reproducing apparatus and a digital broadcast receiving/recording/reproducing method that can remedy copy control information even if any inconvenience occurs during recording a program in an information recording device.

According to an aspect of the invention, there is provided a digital broadcast receiving/recording/repraducing apparatus comprising: a receiving module which receives a broadcast signal of a program that is set to be recorded, a processing module which converts the broadcast signal received by the receiving module into digital picture and sound program data, a memory which records copy control information acquired from the broadcast signal received by the receiving module, a recording control module which encrypts the program data converted by the processing module and records the encrypted program data in a specified recording device, and a memory control module which encrypts the copy control information recorded in the memory and records the encrypted copy control information in the specified recording device and deletes the copy control information recorded in the memory after termination of the recording of the encrypted copy control information.

According to another aspect of the invention, there is provided a digital broadcast receiving/recording/reproducing method comprising: receiving a broadcast signal of a program set to be recorded, converting the received broadcast signal into digital picture and sound program data, recording copy control information acquired from the received broadcast signal, encrypting the program data, and recording the encrypted program data in a specified recording device, and encrypting the recorded copy control information, recording the encrypted copy control information in the specified recording device, and deleting the recorded copy control information after termination of the recording of the encrypted copy control information in the specified recording device.

The invention can be more fully understood from the following detailed description when taken in conjunction with the accompanying drawings, in which:
FIG. 1 is a view for explaining an outline of a digital broadcast receiving/recording/reproducing system according to an embodiment;
FIG. 2 is a view showing an appearance of a digital broadcast receiving/recording/reproducing apparatus according to the embodiment depicted in FIG. 1;
FIG. 3 is a structure explanatory drawing further specifically showing the inside of the digital broadcast receiving/recording/reproducing apparatus according to the embodiment depicted in FIG. 1;
FIG. 4 is an explanatory drawing for explaining an outline of a remote controller used in the apparatus according to the embodiment;
FIG. 5 is a block diagram showing recording a program in a recording device by a digital broadcast recording/reproducing apparatus according to the embodiment;
FIG. 6 is a flowchart when the recording device is registered in the digital broadcast receiving/recording/reproducing apparatus according to the embodiment;
FIG. 7 is a flowchart when the registered recording device is deleted from the digital broadcast receiving/recordina/reproduoing apparatus according to the embodiment;
FIG. 8 is a flowchart showing recording a program in the recording device based on a recording setting in the digital broadcast receiving/recording/reproducing apparatus according to the embodiment; and
FIG. 9 is a block diagram showing copy control information encryption processing in the digital broadcast receiving/recording/reproducing apparatus according to the embodiment.

Various embodiments according to the invention will be described hereinafter with reference to the accompanying drawings. In general, according to one embodiment of the invention, a digital broadcast receiving/recording/reproducing apparatus has a receiving module which receives a broadcast signal of a program that is set to be recorded, a processing module which converts the broadcast signal received by the receiving module into digital picture and sound program data, a recording module which records copy control information acquired from the broadcast signal received by the receiving module, a recording control module which encrypts the program data converted by the processing module to be recorded in a specified recording device and a memory control module which encrypts the copy control information recorded in the recording module to be recorded in the specified recording device and deletes the copy control information recorded in the recording module after termination of the recording.

An embodiment will now be explained hereinafter with reference to the drawings. An outline of a broadcast receiving apparatus will be first explained.

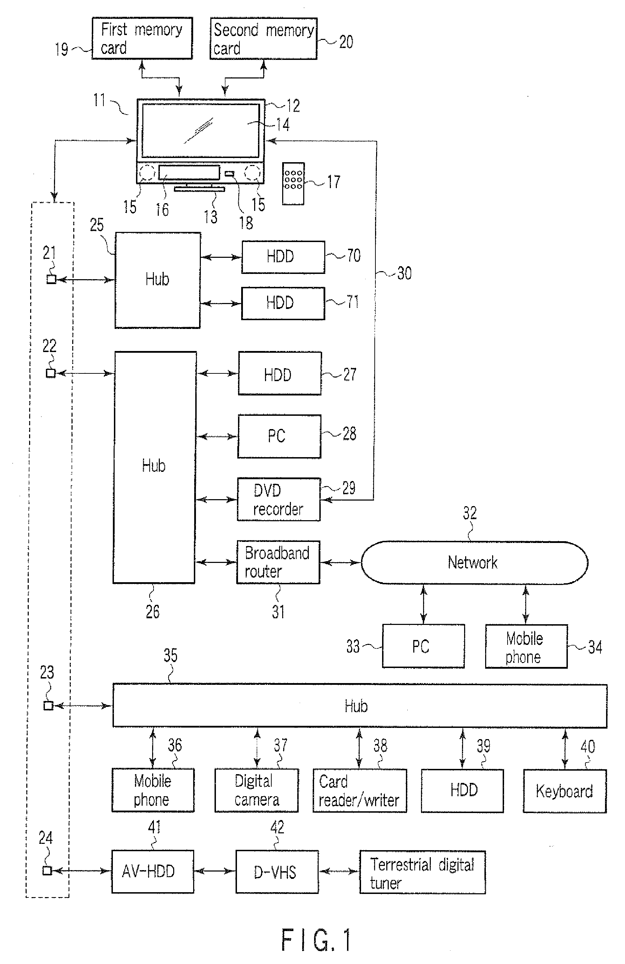

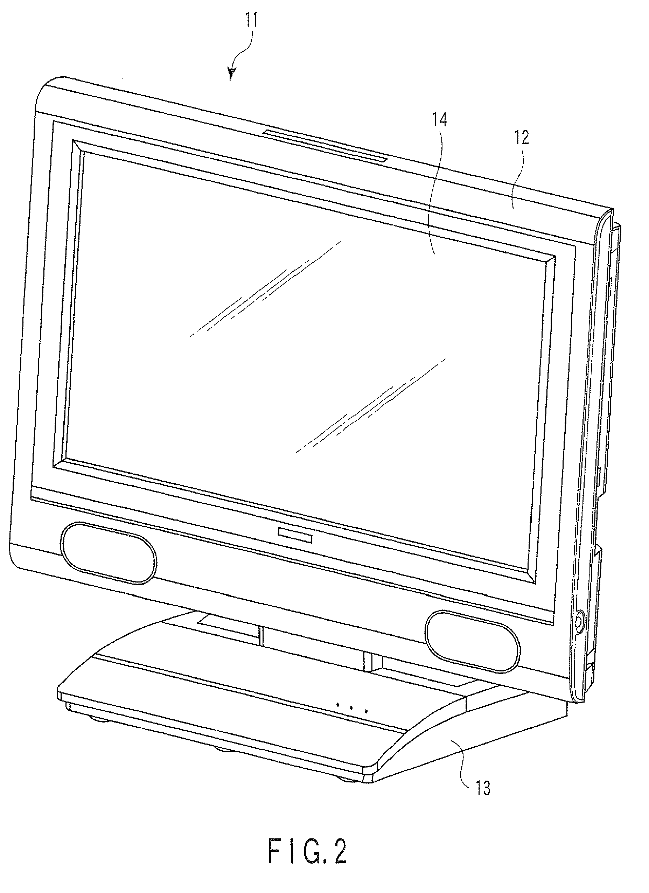

FIG. 1 schematically shows an appearance of a digital broadcast receiving/recording/reproducing apparatus 11 explained in this embodiment and an example of a network system centered on this digital broadcast receiving/recording/reproducing apparatus 11. FIG. 2 shows an appearance of the digital broadcast receiving/recording/reproducing apparatus 11.

The digital broadcast receiving/recording/reproducing apparatus 11 is formed of a thin cabinet 12 and a support pedestal 13 that supports this cabinet 12 in an upright posture. To the cabinet 12 are disposed a planar panel type picture display 14 formed of, e.g., a liquid crystal display panel, a speaker 15, an operating module 16, an optical receiving module 18 that receives operation information transmitted from a remote controller 17, and others.

Further, for example, a first memory card 19 such as a Secure Digital (SD) memory card, a Multimedia Card (MMC), or a Memory Stick is attachable to/detachable from this digital broadcast receiving/reoording/reproducing apparatus 11, and information of, e.g., a program or a photograph is recorded in or reproduced from this first memory card 19.

Furthermore, a second memory card (an IC card) 20 having, e.g., contract information is attachable to or detachable from this digital broadcast receiving/recording/reproducing apparatus 11, and information is recorded in or reproduced from this second memory card 20.

Moreover, this digital broadcast receiving/recording/reproducing apparatus 11 includes a first local area network (LAN) terminal 21, a second LAN terminal 22, a Universal Serial Bus (USB) terminal 23, and an i. Link(registered trademark) terminal 24.

Of these terminals, the first LAN terminal 21 is used as a port dedicated to an HDD compatible with an LAN. This first LAN terminal 21 is used to record/reproduce information into/from a first HDD 70 and a second HDD 71 compatible with the LAN which are network-attached storage (NAS) connected with the first LAN terminal 21 through, e.g., a hub 25 based on Ethernet (registered trademark).

Providing the first LAN terminal 21 as the LAN compatible HDD dedicated port in this manner enables stably recording information of a program with a hi-vision image quality into the first HDD 70 or the second HDD 71 without being affected by, e.g., other network environments or a network use status.

Additionally, the second LAN terminal 22 is used as a general LAN compatible port using Ethernet. This second LAN terminal 22 is connected with devices such as an HDD 27 compatible with the LAN, a personal computer (PC) 28, or a Digital Versatile Disk (DVD) recorder 29 having a built-in HDD through, e.g., a hub 26, and used to transmit information to these devices.

It is to be noted that a dedicated analog transmission path 30 must be provided to the DVD recorder 29 in order to transmit analog picture and sound information to the digital broadcast receiving/recording/reproducing apparatus 11 since digital information transmitted/received through the second LAN terminal 22 is information of a control system.

Further, this second LAN terminal 22 is connected with a network 32 such as Internet through a broadband router 31 connected with the hub 26, and used to transmit information to, e.g., a PC 33 or a mobile phone 34 via the network 32.

Furthermore, the USB terminal 23 is used as a general USB compatible port, and connected with, e.g., a mobile phone 36, a digital camera 37, a card reader/writer 38 for a memory card, an HDD 39, or a keyboard 40 through, e.g., a hub 35 to transmit information to these devices.

The i. Link (registered trademark) terminal 24 is connected with, e.g., an AV-HDD 41 and a Digital Video Home System (D-VHS) 42 in series and used to transmit information to these devices.

Here, although the AV-HDD 41 connected with the i. Link(registered trademark) terminal 24 is illustrated outside the digital broadcast receiving/recording/reproducing apparatus 11 in the drawing, it may be included in the support pedestal 13. That is, the AV-HDD 41 may be integrated with the digital broadcast receiving/recording/reproducing apparatus 11.

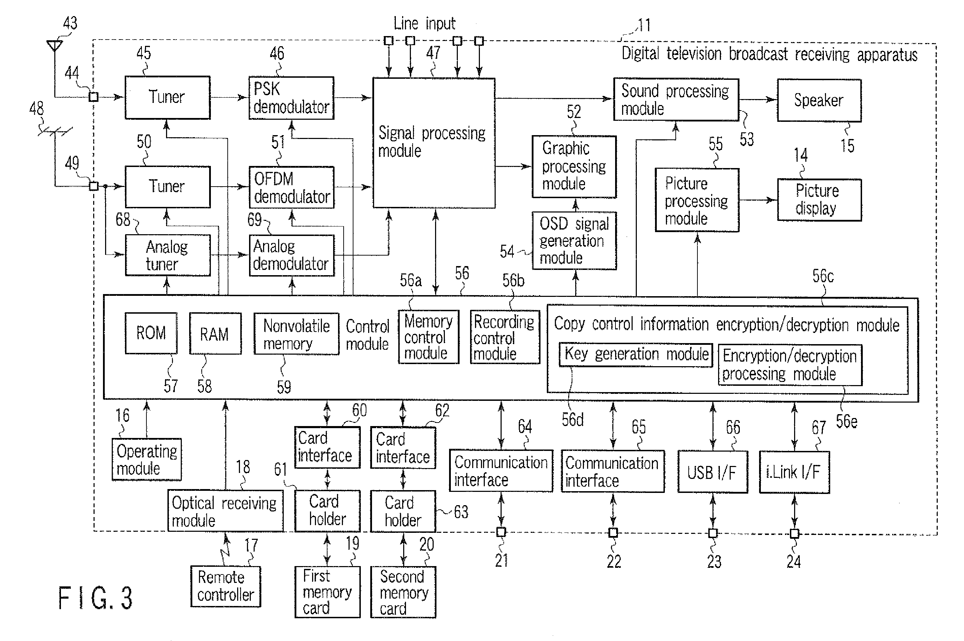

FIG. 3 shows a primary signal processing system of the digital broadcast receiving/recording/reproducing apparatus 11. That is, when a satellite digital television broadcast signal received through a BS/CS digital broadcast receiving antenna 43 is supplied to a satellite digital broadcast tuner 45 through an input terminal 44, a broadcast signal of a desired channel is selected.

The broadcast signal selected by the tuner 45 is supplied to a phase-shift keying (PSK) demodulator 46 to be demodulated into a digital picture signal and a digital audio signal, and the demodulated signals are output to a signal processing module 47.

Furthermore, an analog tuner 68 that receives a terrestrial analog signal is also provided. A signal received by the analog tuner 68 is demodulated by an analog demodulator 69 to be output to the signal processing module 47.

Moreover, a terrestrial digital television broadcast signal receive by a terrestrial digital broadcast receiving antenna 48 is supplied to a terrestrial digital broadcast tuner 50 through an input terminal 49, thereby selecting a broadcast signal of a desired channel.

A broadcast signal selected by the tuner 50 is supplied to an orthogonal frequency division multiplexing (OFDM) demodulator 51 to be demodulated into a digital picture signal and a digital audio signal, and the demodulated signals are output to the signal processing module 47.

Here, the signal processing module 47 selectively performs predetermined digital signal processing with respect to the digital picture signal and the digital audio signal fed from the PSK demodulator 46, the digital picture signal and the digital audio signal supplied from the OFDM demodulator 51, the picture signal and the audio signal fed from the analog demodulator 69, and a picture signal and an audio signal supplied from each line input terminal, and outputs the processed signals to a graphic processing module 52 and an audio processing module 53.

Of these modules, the graphic processing module 52 has a function of superimposing an OSD signal generated by an on-screen display (OSD) signal generation module 54 on the digital picture signal supplied from the signal processing module 47 and outputting the obtained signal. Additionally, this graphic processing module 52 can selectively output the output picture signal from the signal processing module 47 and the output OSD signal from the OSD signal generation module 54, and can combine and output both the outputs to configure respective halves of a screen.

The digital picture signal output from the graphic processing module 52 is supplied to a picture processing module 55. This picture processing module 55 converts the input digital picture signal into a picture signal having a format that can be displayed in the picture display 14, and outputs the converted signal to the picture display 14 to display a picture.

The audio processing module 53 converts the input digital audio signal into an analog audio signal having a format can be reproduced by the speaker 15, and outputs the converted signal to the speaker 15 to reproduce sound.

Here, all operations of this television broadcast receiving/recording/reproducing apparatus 11 including the above-explained various receiving operations are collectively controlled by a control module 56.

The control module 56 has a built-in central processing module (CPU) and others. Upon receiving operation information from the operating module 16 or receiving operation information supplied from the remote controller 17 via the optical receiving module 18, the control module 56 controls respective modules to reflect the operation contents in the apparatus.

In this case, the control module 56 mainly utilizes a read-only memory (ROM) 57 that stores a control program executed by the CPU, a random access memory (RAM) 58 that provides a working area to the CPU, and a nonvolatile memory 59 storing various kinds of setting information, control information, and others.

The control module 56 is connected with a card holder 61 to which the first memory card 19 can be attached through a card interface 60. As a result, the control module 56 can transmit information to the first memory card 19 attached to the card holder 61 via the card interface 60.

The control module 56 is connected with a card holder 63 to which the second memory card 20 can be attached through a card interface 62. As a result, the control module 56 can transmit information to the second memory card 20 attached to the card holder 63 via the card interface 62.

The control module 56 is connected with the first LAN terminal 21 through a communication interface 64. As a result, the control module 56 can transmit information through the communication interface 64 to the LAN compatible first HDD 70 and the second HDD 71 connected with the first LAN terminal 21 via the hub 25. In this case, the control module 56 has a Dynamic Host Configuration Protocol (DHCP) server function, and assigns Internet Protocol (IP) addresses to the LAN compatible first HDD 70 and the second HDD 71 connected with the first LAN terminal 21 to perform control.

The control module 56 is connected with the second LAN terminal 22 via a communication interface 65. As a result, the control module 56 can transmit information, through the communication interface 65 to each device (see FIG. 1) connected with the second LAN terminal 22.

The control module 56 is connected with the USB terminal 23 via a USB interface 66. As a result, the control module 56 can transmit information through the USB interface 66 to each device (see FIG. 1) connected with the USB terminal 23.

The control module 56 is connected with the i. Link (registered trademark) terminal 24 through an i. Link (registered trademark) interface 67. As a result, the control module 56 can transmit information through the i. Link (registered trademark) interface 67 to each device (see FIG. 1) connected with the i. Link (registered trademark) terminal 24.

The control module 56 has a memory control module 56a, a recording control module 56b, and a copy control information encryption/decryption module 56c. The memory control module 56a performs, e.g., writing with respect to the nonvolatile memory 59. The recording control module 56b encrypts and records a program in, e.g., the first HDD 70. The copy control information encryption/decryption module 56c further has a key generation module 56d that generates a key which is used to encrypt copy control information and an encryption/decryption processing module 56e that encrypts or decrypts the copy control information. These characteristics will be explained in more detail.

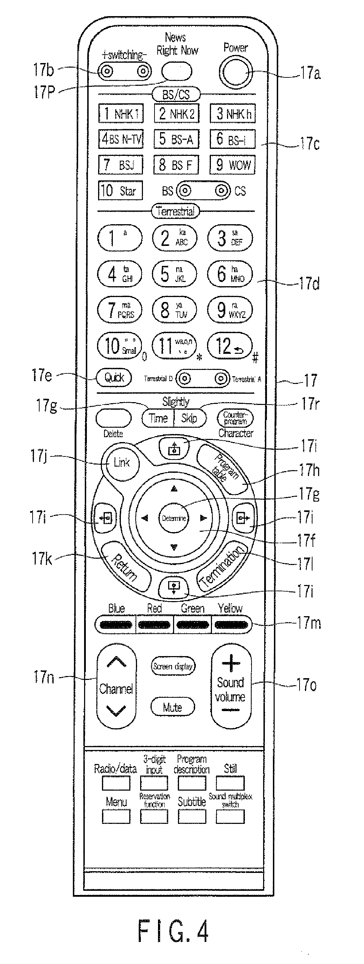

FIG. 4 shows an appearance of the remote controller 17. To this remote controller 17 are mainly provided a power supply key 17a, an input changeover key 17b, satellite digital broadcast channel direct selection keys 17c, terrestrial broadcast channel direct selection keys 17d, a quick key 17e, a cursor key 17f, a decision key 17g, a program table key 17h, a page changeover key 17i, a link key 17j, a return key 17k, an end key 17l, blue, red, green, and yellow color keys 17m, a channel up-down key 17n, a sound volume adjustment key 17o, and others. Further, a news now key 17q, a bit time key 17q, and a skip key 17r are also provided.

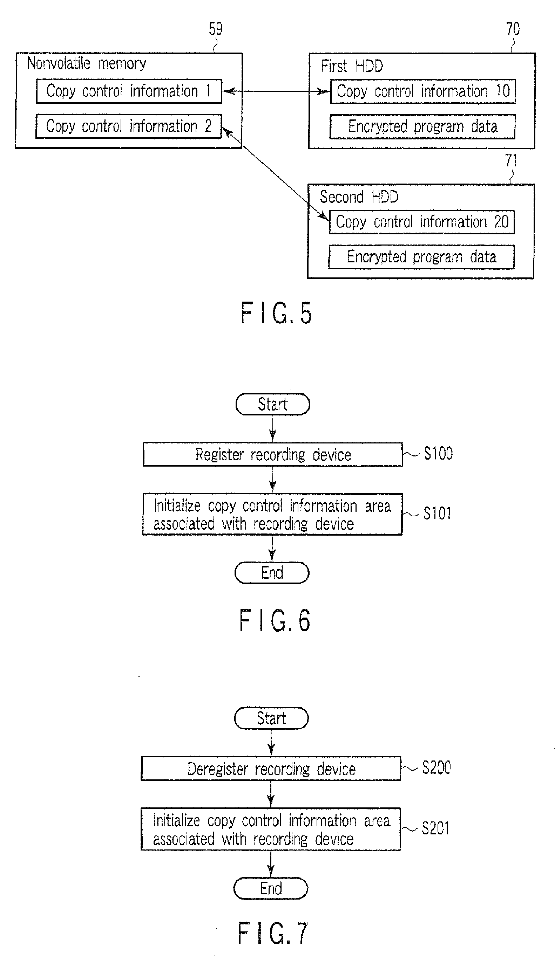

FIG. 5 is a view for explaining recording a program in the first HDD 70 by the digital broadcast receiving/recording/reproducing apparatus 11 according to an embodiment.

A first embodiment will be first explained. The memory control module 56a manages registration or deregistration in regard to a recording device (e.g., the first HDD 70 or the second HDD 71) connected with the digital broadcast receiving/recording/reproducing apparatus 11. For example, it is assumed that six recording devices can be registered in the digital broadcast receiving/recording/reproducing apparatus 11 at maximum. Here, it is assumed that the first HDD 70 or the second HDD 71 is registered in the digital broadcast receiving/recording/reproducing apparatus 11.

The memory control module 56a provides a region associated with the registered first HDD 70 or the second HDD 71 in the nonvolatile memory 59. When a user inputs deregistration of the registered recording device, the memory control module 56a deletes the region associated with the recording device registered in the nonvolatile memory 59.

FIG. 6 is a flowchart when the recording device is registered in the digital broadcast receiving/receiving/recording/reproducing apparatus 11. An example of registering the first HDD 70 will be explained.

First, when a user inputs registration of the HDD 70, the memory control module 56a records that the first HDD 70 is registered in the nonvolatile memory 59 (Block 100). Furthermore, the memory control module 56a initializes a copy control information area associated with the first HDD 70 to be set in the nonvolatile memory 59 (Block 101).

FIG. 7 is a flowchart when deregistering the recording device from the digital broadcast receiving/receiving/recording/reproducing apparatus 11. An example of registering the first HDD 70 will be explained.

First, when a user inputs deregistration of the HDD 70, the memory control module 56a records that the first HDD 70 is deregistered in the nonvolatile memory 59 (Block 200). Moreover, the memory control module 56a initializes the copy control information area associated with the first HDD 70 to be deleted from the nonvolatile memory 59 (Block 201).

A program cannot be, e.g., recorded in a non-registered recording device when the first HDD 70 or the second HDD 71 is registered in the digital broadcast receiving/recording/reproducing apparatus 11, thereby improving security.

A description will be given as to an example where the first HDD 70 or the second HDD 71 is registered in the digital broadcast receiving/recording/reproducing apparatus 11 and a region associated with the first HDD 70 or the second HDD 71 is provided in the nonvolatile memory 59.

First, a user utilizes the remote controller 17 to record a program in the first HDD 70. A recording setting may be configured based on specification of a program or division of a time.

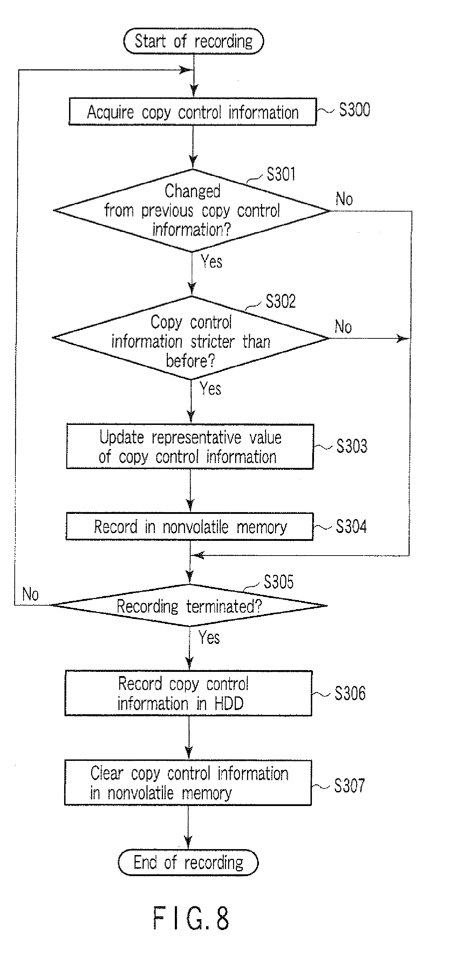

FIG. 8 is a flowchart showing an example of recording a program in the first HDD 70 based on the recording setting.

Based on the recording setting configured by the user, the signal processing module 47 acquires a digital picture signal and a digital sound signal from a broadcast signal selected by the tuner 50 through the OFDM demodulator 51. Additionally, the recording control module 56b encrypts the program and starts recording with respect to the first HDD 70 set as a recording device in which the program is to be recoded.

The memory control module 56a acquires copy control information from the broad cast signal selected by the tuner 50 (Block 300). Further, the memory control module 56a records copy control information 1 in an area (a storage region) in the nonvolatile memory 59 associated with the first HDD 70 set as the recording device in which the program is to be recorded.

Then, the memory control module 56a determines whether the copy control information acquired from the broadcast signal of the program that is in the recording process is changed during recording (Block 301).

When the copy control information is changed (YES in Block 301), the memory control module 56a determines whether conditions of the copy control information are stricter than those of the recorded copy control information 1 (Block 302). The strict conditions mean, e.g., Dubbing 10 from start to a middle point of recording in one recording unit, and it can be said that the conditions are changed to the strict conditions when Dubbing 10 is changed to Copy One Generation along the way. Conversely, it can not be said that the conditions are changed to the strict conditions when Copy One Generation is changed to Dubbing 10 along the way.

If the strict conditions are provided (YES in Block 302), the memory control module 56a updates the copy control information with the strict conditions as the copy control information 1 as a representative value (Block 303). That is, the copy control information 1 is one representative value in the one recording unit set to be recorded, and the strictest copy control information in the one recording unit becomes the representative value. Further, the memory control module 56a records the updated copy control information 1 in the area in the nonvolatile memory 59 associated with the first HDD 70 (Block 304). Here, the memory control module 56a can use a value including a change position at which the copy control information is changed during recording of the program as the updated copy control information. For example, in one recording unit, when Dubbing 10 is adopted from start to a middle point of recording and it is changed to Copy One Generation along the way, information of a position at which the copy control information is changed is also included in the copy control information 1.

Then, the memory control module 56a determines whether recording of the program that is set to be recorded is terminated (Block 305). When recording is not terminated (NO in Block 305), the processing returns to Block 300. Even if recording of the program is abnormally aborted, the copy control information is the strictest copy control information in the one recording unit until abnormal termination occurs.

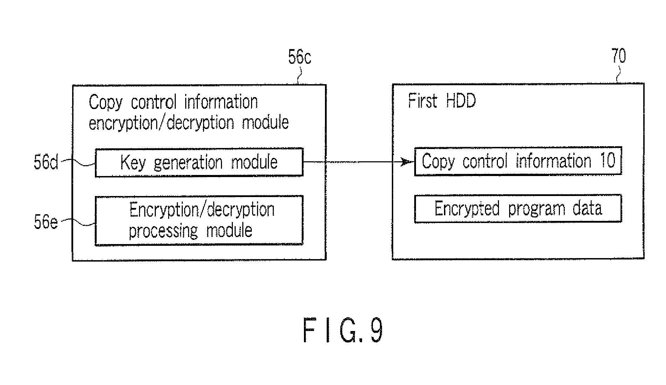

When recording is terminated (YES in Block 305), as shown in FIG. 9, the copy control information encryption/decryption module 56c generates a key that is used to encrypt the copy control information 1 by using the key generation module 56d, encrypts the copy control information 1 recorded in the area in the nonvolatile memory 59 associated with the first HDD 70 by using the encryption/decryption processing module 56e, and records the encrypted information in the first HDD 70 (Block 306).

Further, since recording in the first HDD 70 is normally terminated, the memory control module 56a deletes the copy control information 1 recorded in the area associated with the first HDD 70 (Block 307).

Based on the above-explained processing, as shown in FIG. 5, encrypted program data and encrypted copy control information 10 are recorded in the first HDD 70. Furthermore, the same processing is carried out when the user configures a recording setting of recording a program in the second HDD 71. That is, when the memory control module 56a acquires copy control information from a broadcast signal selected by the tuner 50, this information is recorded as copy control information 2 in an area in the nonvolatile memory 59 associated with the second HDD 71 set as a recording device in which the program is to be recorded as shown in FIG. 5. Moreover, like the above explanation, encrypted program data and encrypted copy control information 20 are recorded in the second HDD 71 as shown in FIG. 5.

Here, in one recording unit, the copy control information encryption/decryption module 56c can encrypt, update, and record the copy control information 1 as copy control information 10 in the first HDD 70 recording a program every time the copy control information 1 that is in a program recording mode is changed.

The key that is used to encrypt program data that is recorded in the first HDD 70 and the key for the copy control information may be or may not be equal to each other.

A description will now be given as to a case where recording of a program is abnormally aborted due to blackout or any other accident. At a time point where the digital broadcast receiving/recording/reproducing apparatus 11 again recognizes the first HDD, the control module 56 determines whether the copy control information 1 of a program subjected to abnormal recording termination is present in the area in the nonvolatile memory 59 associated with the first HDD 70. The time point where the digital broadcast receiving/recording/reproducing apparatus 11 again recognizes the first HDD 70 is, e.g., a time point where the power supply of the digital broadcast receiving/recording/reproducing apparatus 11 is turned on and the control module 56 recognizes connection of the first HDD 70.

When the memory control module 56a determines that the copy control information 1 remains in the area in the nonvolatile memory 59 associated with the first HDD 70, the memory control module 56a collates the copy control information 1 with the copy control information 10 of a corresponding recorded program recorded in the first HDD 70 as shown in FIG. 5.

When the memory control module 56a determines that the copy control information 10 is not set, the memory control module 56a rewrites the copy control information 10 with contents of the copy control information 1 in the nonvolatile memory 59. Further, like the above example, the memory control module 56a deletes the copy control information 1 recorded in the area associated with the first HDD 70.

A second embodiment will now be explained. As a difference from the first embodiment, a copy control information encryption/decryption module 56c records in a first HDD 70 copy control information 1 that is acquired in one recording unit at start of recording and recorded in a nonvolatile memory 59 or an RAM 58 by a memory control module 56a. Further, when the memory control module 56a acquires copy control information different from the copy control information 1 recorded in the nonvolatile memory 59 or the RAM 58 during recording of a program, the copy control information encryption/decryption module 56c newly adds and records this acquired copy control information as the copy control information in the first HDD 70.

That is, every time the copy control information 1 is changed, the copy control information 1 is added and recorded in the first HDD 70 so that the plurality of pieces of the copy control information are maintained. The copy control information 1 may be a value including a position where the copy control information during recording is changed. Therefore, when copy control information 10 recorded in the first HDD 70 has different copy control information in program data as one recording unit, all pieces of copy control information that change with time, including each position where the copy control information is changed, are recorded. When abnormal termination occurs during recording of the program, the copy control information 10 from start to a time point where abnormal terminal occurs and program data are recorded.

When additionally recording the copy control information 10 in the first HDD 70, a key for encryption is changed to again encrypt the entire copy control information 10.

At this moment, the copy control information encryption/decryption module 56c can encrypt the copy control information 1 updated with an encryption key different from the encryption key that is used for the copy control information 10 already recorded in the first HDD 70, thereby again encrypting the entire copy control information 10 recorded in the first HDD 70. The encryption key for the program data recorded in the first HDD 70 and the key for the copy control information may be or may not be equal to each other.

In this case, even if recording of a program is abnormally aborted halfway, since the copy control information 10 and the program data corresponding to a period from start to a time point where abnormal terminal occurs are effective, the copy control information matching with contents of the program recorded in the first HDD 70 can be handled.

When recording of a program is abnormally aborted due to blackout or any other accident, the same operation as that in the first embodiment is carried out.

For example, there can be considered a protocol that authentication is performed with respect to a device of the other party to exchange an encryption/decryption key when a recorded program is moved or copied to the other device, data in a transmission path is encrypted to be transferred, and validation of the program is carried out in a destination device while processing (subtraction of the remaining number of times of copy or invalidation of the program) of the program is performed in a source device after data transfer. However, a time from validation of contents at the destination to execution of the processing of the program at the source is determined, and aborting the processing during copy or movement when the processing cannot be finished within the determined time is specified in some cases.

In order to avoid a case where the processing of the program at the source cannot be finished within the determined time, it is also effective to satisfy the determined processing time in a normal case by performing the processing (subtraction of the remaining number of times of copy or invalidation of the program) of the program in the source device at start of transfer and to remedy copy control information or an encryption/decryption key by holding the copy control information or the encryption/decryption key in a nonvolatile memory like a recording process as a countermeasure for abnormal termination due to power-off during movement or copy of the program.

As a result, even if recording is abnormally aborted at the time of recording the program in the information recording device, the copy control information of the program that is to be recorded in the information recording device can be remedied based on the copy control information recorded in a recording module of the digital broadcast receiving/recording/reproducing apparatus.

Further, writing the copy control information in the information recording device every time the copy control information of the program is changed at the time of recording the program in the information recording device enables holding the copy control information corresponding to a part subjected to program recording even if recording is abnormally aborted.

## Claims

1. A digital broadcast receiving/recording/reproducing apparatus **characterized by** comprising:
a receiving module (50) which receives a broadcast signal of a program that is set to be recorded;
a processing module (47) which converts the broadcast signal received by the receiving module (50) into digital picture and sound program data;
a memory (59) which records copy control information acquired from the broadcast signal received by the receiving module (50);
a recording control module (56b) which encrypts the program data converted by the processing module (47) and records the encrypted program data in a specified recording device (70); and
a memory control module (56a) which encrypts the copy control information recorded in the memory and records the encrypted copy control information in the specified recording device (70) and deletes the copy control information recorded in the memory (59) after termination of the recording of the encrypted copy control information.

2. The apparatus of claim 1, **characterized in that** the memory (59) assigns a storage region where the copy control information is recorded to each registered recording device (70).

3. The apparatus of claim 2, **characterized in that** the memory control module (56a) acquires copy control information from the broadcast signal received by the receiving module (50) and records the copy control information in the storage region in the memory (59) associated with the recording device (70) previously specified as a device that records the program set to be recorded.

4. The apparatus of claim 3, **characterized in that**, when the memory control module (56a) acquires the copy control information with stricter conditions during acquisition of the copy control information of the program set to be recorded, the memory control module (56a) updates the copy control information recorded in the memory (59) to the acquired copy control information with the stricter conditions and records the updated copy control information in the storage region associated with the specified recording device (70).

5. The apparatus of claim 4, **characterized in that** the memory control module (56a) records the copy control information recorded in the memory (59) after termination of recording of the program set to be recorded, and deletes the copy control information recorded in the memory (59).

6. The apparatus of claim 2, **characterized in that** the memory (59) initializes the storage region assigned to the registered recording device (70) when registering the registered recording device or deregistering the registered recording device (70).

7. The apparatus of claim 3, **characterized in that,** when the memory control module (56a) acquires the copy control information with different conditions during acquisition of the copy control information of the program set to be recorded, the memory control module (56a) records the copy control information recorded in the memory (59) and the acquired copy control information with the different conditions in the specified recording device (70).

8. The apparatus of claim 4, **characterized in that** the memory control module (56a) records the copy control information including information of a position where the copy control information is changed.

9. The apparatus of claim 7, **characterized in that** the memory control module (56a) records the copy control information including information of a position where the copy control information is changed.

10. The apparatus of claim 7, **characterized in that,** when the memory control module (56a) adds and records the acquired copy control information with the different conditions in the specified recording device (70), the memory control module (56a) encrypts the entire copy control information recorded in the specified recording device (70) based on encryption different from encryption for the copy control information recorded in the specified recording device (70).

11. The apparatus of claim 4, **characterized in that**, in a case where recording of the program set to be recorded is terminated along the way, the memory control module (56a) determines whether the copy control information is recorded in the storage region in the memory (59) associated with the specified recording device (70), collates the copy control information with the copy control information recorded in the specified recording device (70) when the copy control information is recorded in the storage region, and records in the specified recording device (70) the copy control information recorded in the storage region when the copy control information is not recorded in the specified recording device (70).

12. The apparatus of claim 7, **characterized in that**, in a case where recording of the program set to be recorded is terminated along the way, the memory control module (56a) determines whether the copy control information is recorded in the storage region in the memory (59) associated with the specified recording device (70), collates the copy control information with the copy control information recorded in the specified recording device (70) when the copy control information is recorded in the storage region, and records in the specified recording device (70) the copy control information recorded in the storage region when the copy control information is not recorded in the specified recording device (70).

13. A digital broadcast receiving/recording/reproducing method **characterized by** comprising:
receiving a broadcast signal of a program set to be recorded;
converting the received broadcast signal into digital picture and sound program data;
recording copy control information acquired from the received broadcast signal;
encrypting the program data, and recording the encrypted program data in a specified recording device; and
encrypting the recorded copy control information, recording the encrypted copy control information in the specified recording device, and deleting the recorded copy control information after termination of the recording of the encrypted copy control information in the specified recording device.
